# EUROPEAN PATENT SPECIFICATION

(11) **EP 4 188 008 B1**
(45) Date of publication and mention of the grant of the patent: **07.10.2026**
(21) Application number: 21845345.4
(22) Date of filing: 08.07.2021
(51) Int. Cl.: H04W 76/15, H04W 8/24, H04W 84/12

(54) **COMMUNICATION DEVICE, CONTROL METHOD, AND PROGRAM**
KOMMUNIKATIONSVORRICHTUNG, STEUERUNGSVERFAHREN UND PROGRAMM
DISPOSITIF DE COMMUNICATION, PROCÉDÉ DE COMMANDE ET PROGRAMME

(30) Priority: 22.07.2020 JP 2020125693
(43) Date of publication of application: 31.05.2023
(60) Divisional application: 26201472.3
(73) Proprietor: CANON KABUSHIKI KAISHA, Tokyo 146-8501 (JP)
(72) Inventor: INOHIZA Hirohiko, Tokyo 146-8501 (JP)
(74) Representative: Canon Europe Limited
(86) International application number: PCT/JP2021/025744
(87) International publication number: WO 2022/019131

(56) References cited:
- WO-A1-2019/050704
- US-A1- 2019 150 214
- INSUN JANG (LG ELECTRONICS): "Discussion on Multi-link Setup", vol. 802.11 EHT; 802.11be, no. 5, 14 November 2019 (2019-11-14), pages 1 - 13, XP068164746, Retrieved from the Internet <URL:https://mentor.ieee.org/802.11/dcn/19/11-19-1509-05-00be-discussion-on-multi-link-setup.pptx> [retrieved on 20191114]
- EDWARD AU: "Draft P802.11be_D0.2_redline_compared_to_D0.1.pdf", vol. 802.11 - Editorial, 2 November 2019 (2019-11-02), pages 1, XP068241435, Retrieved from the Internet <URL:https://ieee-sa.imeetcentral.com/p/aQAAAAAEVDCL> [retrieved on 20230712]
- EDWARD AU (HUAWEI): "Specification Framework for TGbe", vol. 802.11 EHT; 802.11be, no. 11, 12 July 2020 (2020-07-12), pages 1 - 41, XP068169932, Retrieved from the Internet <URL:https://mentor.ieee.org/802.11/dcn/19/11-19-1262-11-00be-specification-framework-for-tgbe.docx> [retrieved on 20200712]
- PATIL ABHISHEK, HO DUNCAN, GEORGE CHERIAN, ALFRED ASTERJADHI : "Container for advertising ML Information", IEEE 802.11-20/0357R5, 15 March 2020 (2020-03-15), pages 1 - 30, XP055901275, Retrieved from the Internet <URL:https://mentor.ieee.org/802.11/dcn/20/11-20-0357-05-00be-mlo-container-structure-for-capability-advertisement.pptx> [retrieved on 20220315]
- EDWARD AU (HUAWEI): "Compendium of straw polls and potential changes to the Specification Framework Document", IEEE DRAFT; 11-20-0566-43-00BE-COMPENDIUM-OF-STRAW-POLLS-AND-POTENTIAL-CHANGES-TO-THE-SPECIFICATION-FRAMEWORK-DOCUMENT, IEEE-SA MENTOR, PISCATAWAY, NJ USA, vol. 802.11 EHT; 802.11be, no. 43, 20 July 2020 (2020-07-20), Piscataway, NJ USA , pages 1 - 127, XP068170141
- ABHISHEK PATIL (QUALCOMM): "MLO: Discovery and beacon-bloating", IEEE DRAFT; 11-20-0356-03-00BE-MLO-DISCOVERY-AND-BEACON-BLOATING, IEEE-SA MENTOR, PISCATAWAY, NJ USA, vol. 802.11 EHT; 802.11be, no. 3, 10 June 2020 (2020-06-10), Piscataway, NJ USA , pages 1 - 16, XP068169516

## Description

### Technical Field

The present invention relates to a communication apparatus for wireless communication, and a wireless communication method.

### Background Art

Institute of Electrical and Electronics Engineers (IEEE) 802.11 series is known as a Wireless Local Area Network (WLAN) communication specification standard developed by the IEEE. WLAN stands for Wireless Local Area Network. The IEEE802.11 series standard includes the IEEE802.11a/b/g/n/ac/ax standards.

Patent Document 1 discloses execution of wireless communication using, in a case of communication compliant with the IEEE802.11ax standard, Orthogonal Frequency Division Multiple Access (OFDMA). The IEEE802.11ax standard achieves a high peak throughput by execution of wireless communication using OFDMA.

The IEEE has been studying the development of the IEEE802.11be standard as a new standard of the IEEE802.11 series to further improve the throughput and the frequency use efficiency. In the IEEE802.11be standard, a technique for establishment of a plurality of connections by an Access Point (AP) with a Station (STA) via a plurality of different frequency channels has being studied to achieve wireless communication at higher speeds. Known communication apparatuses are described in INSUN JANG (LG ELECTRONICS): "Discussion on Multi-link Setup", IEEE DRAFT; 11-19-1509-05-00BE-DISCUSSION-ON-MUL Tl-LINKSETUP, IEEE-SA MENTOR, PISCATAWAY, NJ USA, 802.11 EHT; 802.11 be, no. 5, 14 November 2019 (2019-11-14), pages 1-13, and in non-prepublished

EDWARD AU (HUAWEI): "Specification Framework for TGbe", IEEE DRAFT; 11-19-1262-11-00BE-SPECIFICATION-FRAMEWORK-FORTGBE, IEEE-SAMENTOR, PISCATAWAY, NJ USA, 802.11 EHT; 802.11 be, no. 11, 12 July 2020 (2020-07-12), pages 1-41.

### Citation List

### Patent Literature

PTL 1: Japanese Patent Laid-Open No. 2018-50133

### Summary of Invention

### Technical Problem

When a plurality of links are established between an AP and a STA and communication is performed, the AP and the STA communicate capability information by using a probe request frame and a probe response frame. However, in the communication from the AP to provide capability information to the STA, if the AP provides a notification about capability information on all frequency bands or frequency channels via which the AP can establish links, a frame size is increased and a communication overhead is increased.

In view of the above-described issues, the present invention is directed to reducing communication overhead in transmission of capability information about communication to be performed via a plurality of links established with another communication apparatus.

### Solution to Problem

To achieve the above-described object, a communication apparatus includes reception means for receiving a probe request frame including a multi-link element from another communication apparatus; decision means for deciding, based on predetermined identification information which is included in a field, which corresponds to a link, in the multi-link element included in the probe request frame received by the reception means from the another communication apparatus, to include, in a probe response frame corresponding to the link, capability information indicating a capability related to multi-link communication that is performed via a plurality of links to be established with a partner apparatus, and the capability information being about a link corresponding to the predetermined identification information, as capability information about each link; and transmission means for transmitting the probe response frame including the capability information decided by the decision means as a response to the probe request frame, wherein in a case where the predetermined identification information corresponding to the link is not included in the multi-link element included in the probe request frame received by the reception means, the transmission means transmits the probe response frame including information for each link corresponding to all links supported by the communication apparatus as the capability information.. Further aspects of the invention are defined by the appended claims.

### Advantageous Effects of Invention

According to the present invention, it is possible to reduce a communication overhead in transmission of capability information about communication to be performed via a plurality of links established with another communication apparatus.

### Brief Description of Drawings

The accompanying drawings, which are incorporated in and constitute a part of the specification, illustrate embodiments of the invention and, together with the description, serve to explain principles of the invention.

In the following description, the invention is described with particular reference to figures 5 to 7, while the description of the remaining figures is provided for illustrative purposes for a better understanding of the invention.
[Fig. 1] Fig. 1 is a diagram illustrating a configuration of a network to which an AP 102 belongs.
[Fig. 2] Fig. 2 is a diagram illustrating a hardware configuration of the AP 102.
[Fig. 3] Fig. 3 is a diagram illustrating a functional configuration of the AP 102.
[Fig. 4] Fig. 4 is a sequence diagram illustrating an example of processing that is executed when the AP 102 provides a notification about capability information to an STA 103.
[Fig. 5] Fig. 5 is a diagram illustrating a frame configuration example of a probe request frame.
[Fig. 6] Fig. 6 is a diagram illustrating a frame configuration example of a probe response frame.
[Fig. 7] Fig. 7 is a flowchart illustrating processing that is executed when the AP 102 provides a notification about capability information.
[Fig. 8] Fig. 8 is a sequence diagram illustrating another example of processing to that is executed when the AP 102 provides a notification about capability information to the STA 103.
[Fig. 9] Fig. 9 is a flowchart illustrating another processing that is executed when the AP 102 provides a notification about capability information.

### Description of Embodiments

Exemplary embodiments of the present invention will be described in detail below with reference to the accompanying drawings. Configurations described in the following exemplary embodiments are merely examples, and the present invention is not limited to the illustrated configurations.

### <First Exemplary Embodiment>

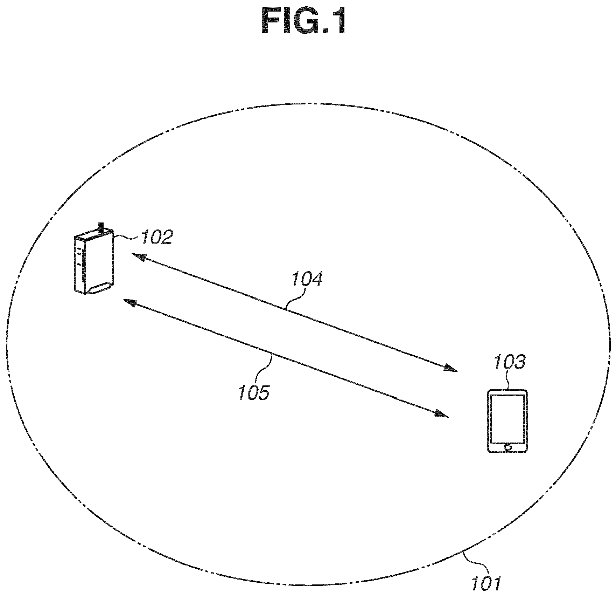

Fig. 1 illustrates a configuration of a network in which an access point (AP) 102 according to an exemplary embodiment of the present invention participates. The AP 102 is a communication apparatus having a role of establishing a network 101. A station (STA) 103 is a communication apparatus having a role of participating in the network 101 established by the access point. Each of the communication apparatuses is compliant with the IEEE 802.11 be (EHT) standard and can execute wireless communication compliant with the IEEE 802.11 be standard via the network 101. IEEE stands for Institute of Electrical and Electronics Engineers. EHT stands for Extremely High Throughput. EHT can be interpreted as an abbreviation for Extreme High Throughput. Each of the communication apparatuses can perform communication in frequency bands of a 2.4 GHz band, a 5 GHz band, and a 6 GHz band. The frequency bands used by each of the communication apparatuses are not limited to the above-described frequency bands. Any other different frequency bands, such as a 60 GHz band, can also be used. Each of the communication apparatuses can perform communication using bandwidths of 20 MHz, 40 MHz, 80 MHz, 160 MHz, and 320 MHz.

The AP 102 and the STA 103 establish a link via a plurality of frequency channels and perform multi-link communication. Each frequency channel used herein refers to the frequency channel which is defined in the IEEE 802.11 series standards and via which wireless communication compliant with the IEEE 802.11 series standards can be executed. In the IEEE 802.11 series standards, a plurality of frequency channels are defined in each of the frequency bands of the 2.4 GHz band, the 5 GHz band, and the 6 GHz band. The IEEE 802.11 series standards also define the bandwidth for each frequency channel as 20 MHz. A bandwidth of 40 MHz or more created by channel bonding of the adjacent frequency channels may be used in a frequency channel. For example, the AP 102 and the STA 103 can establish a first link 104 via a first frequency channel in the 2.4 GHz band and a second link 105 with the STA 103 via a second frequency channel in the 5 GHz band, to communicate with each other via both of the links. In this case, the AP 102 maintains the second link 105 via the second frequency channel in parallel with the first link 104 via the first frequency channel. The AP 102 establishes the links with the STA 103 via a plurality of frequency channels in this way, whereby the throughput in communication with the STA 103 can be improved.

The AP 102 and the STA 103 may establish a plurality of links in different frequency bands in multi-link communication. For example, the AP 102 and the STA 103 may establish a third link in the 6 GHz band in addition to the first link 104 in the 2.4 GHz band and the second link 105 in the 5 GHz band. Alternatively, the AP 102 and the STA 103 may establish links via a plurality of different channels included in the same frequency band. For example, the AP 102 and the STA 103 may establish the first link 104 via channel 1 in the 2.4 GHz band and the second link 105 via channel 5 in the 2.4 GHz band. Links in the same frequency band and links in different frequency bands can also be established. For example, the AP 102 and the STA 103 may establish the third link via channel 36 in the 5 GHz band in addition to the first link 104 via channel 1 in the 2.4 GHz band and the second link 105 via channel 5 in the 2.4 GHz band. Establishment of a plurality of connections in different frequency bands with the STA 103 in this way allows the AP 102 to communicate, when a certain band is in congestion, with the STA 103 in other bands, which prevents degradation in the throughput in communication with the STA 103.

The AP 102 and the STA 103 can execute communication in three modes as multi-link communication. The modes include an asynchronous mode (async mode). **In** this mode, communication via each link in multi-link communication is asynchronously performed. Specifically, the communication via the first link and the communication via the second link are executed at separate timings, respectively. Accordingly, the communication via the first link and the communication via the second link can be performed at any timing regardless of the timing for communication via other links.

The modes include a synchronous mode. **In** this mode, communication via a plurality of links is synchronously executed. Specifically, the communication via the first link and the communication via the second link are started at the same timing. **In** this case, the communication via each link is started at the same time, which eliminates the need for one link to perform carrier sensing on the communication via the other link.

The modes include a semi-asynchronous mode (semi-async mode). This mode is a mode in which when data is communicated via a certain link and a frequency channel via another link is vacant, communications via the both links are simultaneously executed. For example, when a first link backoff counter indicates "0" and a frequency channel via the second link is vacant, the communication via the first link and the communication via the second link are started at the same timing. **In** this case, when a second link backoff counter may indicate a value other than "0". When the first link backoff counter indicates "0" and a frequency channel via the second link is not vacant, only the communication via the first link is started and the communication via the second link is not started.

The AP 102 and the STA 103 support at least any one of the above-described three modes as a multi-link communication mode. In a case where the AP 102 and the STA 103 support a plurality of modes, at least one of the AP 102 and the STA 103 selects any one of the modes for multi-link communication according to a user instruction, an instruction from an application, a communication status, or the like.

While the AP 102 and the STA 103 are compliant with the IEEE 802.11 be standard, these apparatuses may be compliant with at least any one of the legacy standards that are standards prior to the IEEE 802.11 be standard. The legacy standards include the IEEE 802.11 a/b/g/n/ac/ax standards. In the present exemplary embodiment, at least any one of the IEEE 802.11 a/b/g/n/ac/ax/be standards is referred to as the IEEE 802.11 series standards. In addition to the IEEE 802.11 series standards, the AP 102 and the STA 103 may be compliant with other communication standards, such as Bluetooth^{®}, Near Field Communication (NFC), Ultra Wide Band (UWB), Zigbee, and Multi Band OFDM Alliance (MBOA). UWB stands for Ultra Wide Band, and MBOA stands for Multi Band OFDM Alliance. OFDM stands for Orthogonal Frequency Division Multiplexing. NFC stands for Near Field Communication. The UWB includes wireless universal serial bus (USB), wireless 1394, and Winet. The AP 102 and the STA 103 may also be compliant with communication standards for wired communication, such as wired LAN.

While, specific examples of the AP 102 include a wireless LAN router and a personal computer (PC), the AP 102 is not limited to these examples. The AP 102 may be any communication apparatus that can execute multi-link communication with another communication apparatus. The AP 102 may also be an information processing device, such as a wireless chip, capable of wireless communication compliant with the IEEE 802.11 be standard. Specific examples of the STA 103 include a camera, a tablet, a smartphone, a PC, a mobile phone, and a video camera. However, the STA is not limited to these examples. The STA 103 may be any communication apparatus capable of multi-link communication with another communication apparatus. Alternatively, the STA 103 may be any information processing device, such as a wireless chip, capable of wireless communication compliant with the IEEE 802.11 be standard. While the network illustrated in Fig. 1 includes one AP and one STA, the number of APs and the number of STAs are not limited to this example. The information processing apparatus, such as a wireless chip, may include an antenna to transmit generated signals.

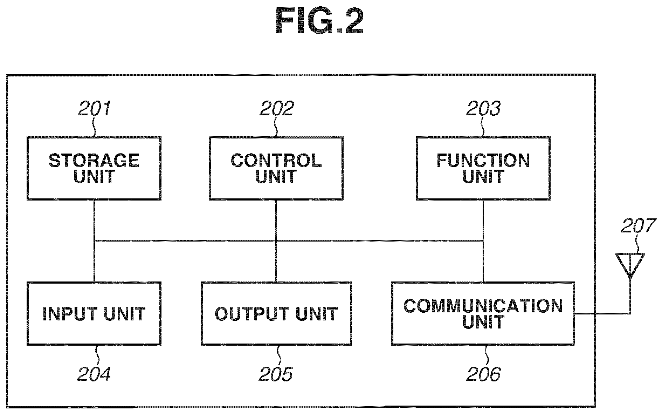

Fig. 2 illustrates a hardware configuration of the AP 102 in the present exemplary embodiment. The AP 102 includes a storage unit 201, a control unit 202, a function unit 203, an input unit 204, an output unit 205, a communication unit 206, and an antenna 207.

The storage unit 201 includes one or more memories, such as a ROM and a RAM, and stores computer programs for various operations to be described below, and various information, such as communication parameters, for wireless communication. ROM stands for Read-Only Memory, and RAM stands for Random Access Memory. As the storage unit 201, not only memories, such as a ROM and a RAM, but also storage media, such as a flexible disk, a hard disk, an optical disk, a magneto-optical disk, a CD-ROM, a CD-R, a magnetic tape, a non-volatile memory card, and a DVD may be used. The storage unit 201 may include a plurality of memories.

The control unit 202 includes, for example, one or more processors, such as a CPU and an MPU, and executes computer programs stored in the storage unit 201 to control the entire AP 102. The control unit 202 may control the entire AP 102 by cooperating computer programs and an operating system (OS) stored in the storage unit 201. Further, the control unit 202 generates data and signals (wireless frames) to be transmitted in communication with another communication apparatus. CPU stands for Central Processing Unit, and MPU stands for Micro Processing Unit. The control unit 202 may include a plurality of processors, such as a multicore, and the plurality of processors may control the entire AP 102.

Further, the control unit 202 controls the function unit 203 to execute wireless communication and predetermined processing, such as image capturing, printing, projection, and the like. The function unit 203 is hardware that enables the AP 102 to execute predetermined processing.

The input unit 204 receives various operations from a user. The output unit 205 performs various output operations for the user via a monitor screen or a speaker. In this case, the output operations by the output unit 205 may include a display on a monitor screen, an audio output from a speaker, and a vibration output. Both the input unit 204 and the output unit 205 may be implemented in one module like a touch panel. The input unit 204 and the output unit 205 may be integrally formed into the AP 102 or may be separated from the AP 102.

The communication unit 206 controls wireless communication compliant with the IEEE 802.11 be standard. Further, the communication unit 206 may control wireless communication compliant not only with the IEEE 802.11 be standard, but also with other IEEE 802.11 series standards, and may control wired communication via a wired LAN or the like. The communication unit 206 controls the antenna 207 to transmit and receive signals for wireless communication generated by the control unit 202. In a case where the AP 102 is compliant not only with the IEEE 802.11 be standard, but also with the NFC standard, the Bluetooth^{®} standard, and the like, the AP 102 may control wireless communication compliant with these communication standards. In a case where the AP 102 can execute wireless communication compliant with a plurality of communication standards, the AP 102 may include communication units and antennas that are compliant with the respective communication standards. The AP 102 communicates data, such as image data, document data, or video data, via the communication unit 206. The antenna 207 may be separated from the communication unit 206 or may be integrally formed into the communication unit 206 as one module.

The antenna 207 is an antenna that supports communication in the 2.4 GHz band, the 5 GHz band, and the 6 GHz band. While, in the present exemplary embodiment, the AP 102 incudes one antenna, different antennas may be provided for each frequency band. In a case where the AP 102 includes a plurality of antennas, the AP 102 may include the communication units 206 each corresponding to a different one of the plurality of antennas.

The STA 103 includes a hardware configuration similar to that of the AP 102.

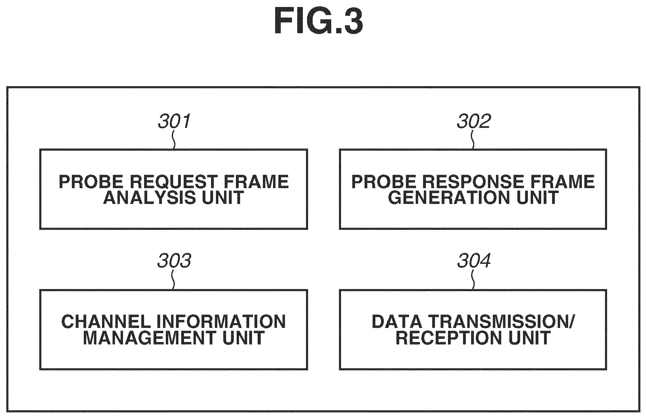

Fig. 3 illustrates a functional configuration of the AP 102 in the present exemplary embodiment. The AP 102 includes a probe request frame analysis unit 301, a probe response frame generation unit 302, a channel information management unit 303, and a data transmission/reception unit 304.

The probe request frame analysis unit 301 is a block that analyzes a probe request frame received from the STA 103. The probe request frame is one of management frames compliant with the IEEE 802.11 series standards and is a frame to request network information. In the present exemplary embodiment, the probe request frame includes information indicating whether the STA 103 supports multi-link communication, and information about a frequency channel supported by the STA 103 in the communication.

The probe response frame generation unit 302 is a block that generates a probe response frame to be transmitted from the AP 102. The probe response frame is one of management frames compliant with the IEEE 802.11 series standards and is a frame that is transmitted as a response to the probe request frame and provides network information. In the present exemplary embodiment, the probe response frame includes capability information about multi-link communication with the AP 102. In the present exemplary embodiment, the probe response frame generation unit 302 generates a frame including information about multi-link communication corresponding to the frequency channel that is indicated by the received probe request frame as a channel supported by the STA 103 in the communication. In this processing, excluding information about multi-link communication corresponding to a frequency channel that is supported by the AP 102 but is not supported by the STA 103 can reduce a communication overhead.

The channel information management unit 303 is a block that manages information about a frequency channel supported by the AP 102 in multi-link communication. Specifically, the channel information management unit 303 manages information about at least one of pieces of information on a frequency channel via which the AP 102 currently executes multi-link communication and information on a frequency channel via which the AP 102 can execute multi-link communication.

The data transmission/reception unit 304 is a block that transmits and receives management frames and data frames compliant with the IEEE 802.11 series standards.

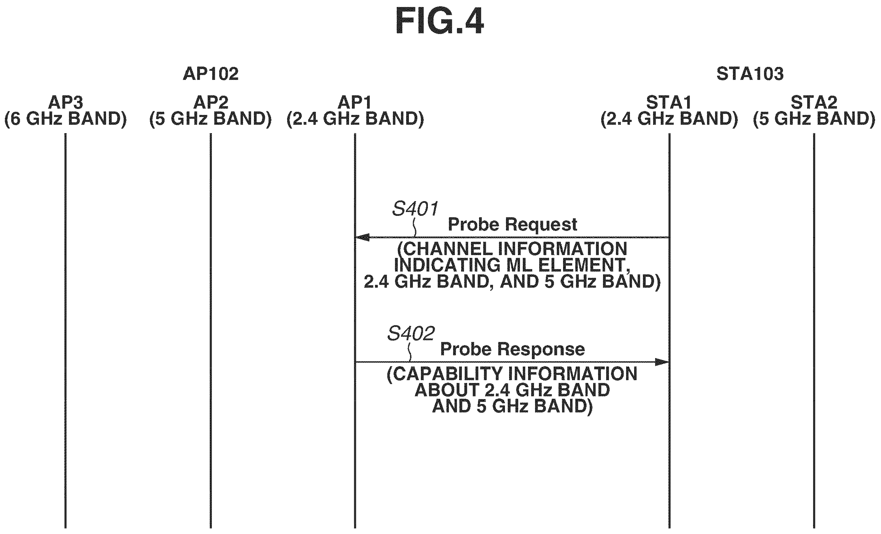

Fig. 4 is a sequence diagram illustrating an example of processing that is executed when the AP 102 provides the STA 103 with a notification about capability information. The processing in this sequence is started in response to power-on of the AP 102 and the STA 103. Alternatively, the processing may be started in response to issuance of a multi-link communication start instruction from the user or application in at least one of the AP 102 and the STA 103. Yet alternatively, the processing may be started when the amount of data to be communicated with a partner device is more than or equal to a predetermined threshold in at least one of the AP 102 and the STA 103.

In the present exemplary embodiment, the AP 102 supports multi-link communication using at most three links and includes connection processing units each corresponding to a different link of the plurality of links. Specifically, the AP 102 includes connection processing units AP 1 to AP 3 that use frequency bands different from each other. On the other hand, the STA 103 supports multi-link communication using at most two links and includes connection processing units STA 1 and STA 2 that use frequency bands different from each other. In the present exemplary embodiment, the STA 103 does not support wireless communication in the 6 GHz band.

The STA 1 that is included in the STA 103 and operates in the 2.4 GHz band transmits the probe request frame to request capability information about multi-link communication for the AP 102 (S401). In this processing, the STA 103 may transmit a probe request frame in this step as a response to a beacon frame (not illustrated) received from the AP 102 prior to S401.

The probe request frame that is transmitted from the STA 103 in this processing includes a multi-link (ML) element and channel information indicating at least one of frequency channels and a frequency band supported by the STA 103. The ML element is information indicating that the STA 103 supports multi-link communication. In the present exemplary embodiment, the STA 103 supports wireless communication in the 2.4 GHz band and the 5 GHz band, and thus the probe request frame includes information indicating that the 2.4 GHz band and the 5 GHz band are supported, as channel information.

While, in the present exemplary embodiment, the probe request frame includes channel information separately from the ML element, the configuration of the probe request frame is not limited to this example, and channel information may be included in the ML element.

The AP 102 transmits the probe response frame including the capability information decided based on the channel information about the STA 103 included in the received probe request frame (S402). The AP 102 compares the channel information indicating frequency channels or a frequency band for the own apparatus supporting multi-link communication with the channel information about the STA 103. Then, the AP 102 includes only the capability information about the frequency band or channel supported by the STA 103 in the probe response frame. In Fig. 4, the STA 103 supports only the 2.4 GHz band and the 5 GHz band, and thus the AP 102 transmits the probe response frame including capability information about the 2.4 GHz band and the 5 GHz band. In this case, the probe response frame to be transmitted does not include capability information about the 6 GHz band. Consequently, the amount of information included in the probe response frame is reduced, which leads to a reduction in communication overhead.

While, in the present exemplary embodiment, the STA 103 does not support wireless communication in the 6 GHz band, the configuration is not limited to this example, and the STA103 may have a configuration in which the STA 103 can execute wireless communication in the 6 GHz band but does not support multi-link communication. In this case, the AP 102 decides capability information to be included in the probe response frame to be transmitted, based on the channel information included in the received ML element.

While, in the present exemplary embodiment, information indicating the frequency band supported by the STA 103 is included as channel information, information indicating the frequency channel supported by the STA 103 may also be included in addition to or in place of the information indicating the frequency band. In this case, the AP 102 may transmit the probe response frame including only the capability information about the frequency channel supported by the STA 103. For example, in a case where the STA 103 transmits the probe request frame including information indicating channel 1 to channel 5 in the 2.4 GHz band as channel information, the AP 102 may transmit the probe response frame that includes capability information about channel 1 to channel 5 and does not include capability information about channel 6 to channel 13.

The AP 1 to AP 3 may be configured as independent pieces of hardware or may be configured as software. The same can be applied to STA 1 and STA 2.

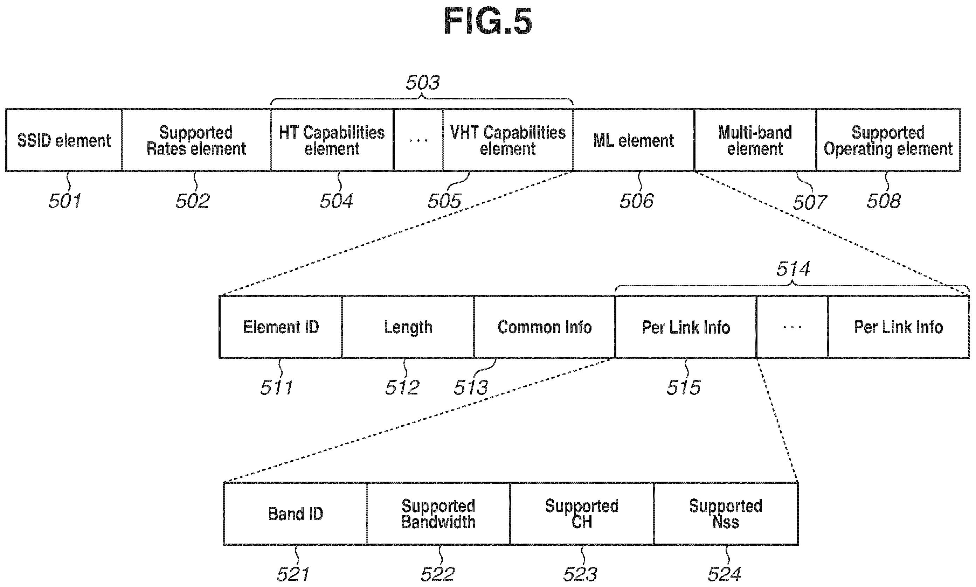

Fig. 5 illustrates a frame configuration example of the probe request frame. In the present exemplary embodiment, the probe request frame includes fields of a Service Set IDentifier (SSID) element 501, a Supported Rates element 502, and an HT Capabilities element 504. HT stands for High Throughput. Further, the probe request frame includes fields of a Very High Throughput (VHT) Capabilities element 505 and an ML element 506. Further, the probe request frame includes fields of a Multi-band element 507 and a Supported Operating element 508.

The STA 103 sequentially transmits the fields illustrated in Fig. 5 from the SSID element 501 on the left side. The STA 103 may start to transmit the probe request frame after completion of generation of all the fields included in the probe request frame. Alternatively, the STA 103 may start the transmission after completion of generation of some fields and may perform generation of the other fields and transmission of the generated fields in parallel.

There is no need for the probe request frame to include all the fields illustrated in Fig. 5, and at least one of the fields may be omitted.

The SSID element 501 is a field to designate the SSID of the AP 102 for the STA 103 to request capability information.

The Supported Rates element 502 is a field indicating a list of data rates supported by the STA 103.

A field 503 to be transmitted after the Supported Rates element 502 includes a field indicating the capability information about the STA 103 in the channel via which the STA 103 transmits the probe request frame. In the present exemplary embodiment, specifically, the field 503 includes the HT Capabilities element 504 and the VHT Capabilities element 505. However, the configuration of the field 503 is not limited to this example.

The HT Capabilities element 504 is a field that is for communication compliant with the IEEE 802.11 n standard and indicates the capability information about the STA 103.

The VHT Capabilities element 505 is a field that is for communication compliant with the IEEE 802.11 ac standard and indicates the capability information about the STA 103.

The field 503 may include an EHT Capabilities element in place of or in addition to the HT Capabilities element 504 and the VHT Capabilities element 505. The EHT Capabilities element is a field that is for communication compliant with the IEEE 802.11 be standard is performed and indicates the capability information about the STA 103.

The multi-link (ML) element 506 is a field indicating capability information in multi-link communication for the STA 103. The probe request frame including the ML element 506 indicates that the STA 103 supports multi-link communication.

The probe request frame transmitted from a STA not supporting multi-link communication includes no ML element.

The ML element 506 includes an Element ID field 511 and a Length field 512, like the other information elements defined in the IEEE 802.11 series standards. The ML element 506 further includes fields indicating information unique to each element. The fields indicating information unique to each element include a Common Info field 513, which includes information common to all links, and a field 514 including at least one Per Link Info 515 including information unique to each link.

In the present exemplary embodiment, the ML element 506 includes information about a frequency channel, via which the STA 103 has already established a link with another communication apparatus, and/or information about the frequency channel, via which the STA 103 can execute multi-link communication.

The Element ID field 511 is a field including information for identifying each element.

The Length field 512 is a field including information indicating the data length of each element.

The Per Link Info 515 further includes sub-fields 521 to 524.

The Band ID 521 is a sub-field including information for identifying each frequency band. Specifically, as illustrated in Table 1, a value indicating a frequency band is included in the sub-field.

**[Table 1]**

| Value | Content |
|---|---|
| 0 | 2.4 GHz band |
| 1 | 5 GHz band |
| 2 | 6 GHz band |

A Supported Bandwidth 522 is a sub-field including information indicating the bandwidth supported by the STA 103 in multi-link communication in the frequency band indicated by the Band ID 521. Specifically, as illustrated in Table 2, a value indicating a bandwidth is included in the sub-field.

**[Table 2]**

| Value | Content |
|---|---|
| 0 | 20 MHz bandwidth |
| 1 | 40 MHz bandwidth |
| 2 | 80 MHz bandwidth |
| 3 | 160 MHz bandwidth |
| 4 | 240 MHz bandwidth |
| 5 | 320 MHz bandwidth |

A Supported Channel (CH) 523 is a sub-field including information indicating a channel via which the STA 103 can execute multi-link communication in the frequency band indicated by the Band ID 521. This sub-field may include information indicating a channel via which the STA 103 has already established a link, in place of or in addition to this information. For example, in a case where the Band ID 521 includes information indicating the 2.4 GHz band, the value indicating the channel as illustrated in Table 3 is included in the sub-field. This sub-field may include only information indicating one frequency channel or may include information indicating a plurality of frequency channels.

**[Table 3]**

| Bit | Content |
|---|---|
| 0 | CHANNEL 1 |
| 1 | CHANNEL 2 |
| 2 | CHANNEL 3 |
| ..... | ..... |
| 12 | CHANNEL 13 |

The Supported Nss 524 is a sub-field including information indicating a maximum number of multiple input/multiple output (MIMO) streams supported by the STA 103 in multi-link communication in the frequency band indicated in the Band ID 521.

The Per Link Info 515 may include all or some of the sub-fields 521 to 524. For example, the Per Link Info 515 may be configured to include the Band ID 521 and configured not to include the Supported CH 523.

The ML element 506 may be configured to include one Per Link Info 515 for each frequency band or may be configured to include one Per Link Info 515 for each frequency channel.

The Multi-band element 507 is a field including information indicating the frequency band or the frequency channel supported by the STA 103. The probe request frame including the Multi-band element 507 indicates that the STA 103 supports communication in a plurality of frequency bands. The ML element 506 is a field including the frequency band and the frequency channel via which the STA 103 can execute multi-link communication. However, this field includes information indicating the frequency band and the frequency channel via which the STA 103 can execute not only multi-link communication, but also wireless communication.

The Multi-band element 507 includes the Band ID including information indicating the frequency band in which the STA 103 can execute wireless communication. This element further includes operating classes including information indicating the frequency channel via which the STA 103 can execute wireless communication in the frequency band indicated by the Band ID. The operating classes include information indicating a set of a plurality of frequency channels via which the STA 103 can execute wireless communication. The Multi-band element 507 may include only one of the Band ID and the operating classes.

The Supported Operating element 508 is a field including information about the frequency channel supported by the STA 103 in each country. Specifically, this field includes information indicating the frequency channel supported by the STA 103 in the country in which the STA 103 is present. This field includes a value for identifying a set of one or more frequency channels and a frequency band as information.

The Multi-band element 507 and the Supported Operating element 508 are information defined in the standards prior to the IEEE 802.11 ax standard.

In the present exemplary embodiment, the STA 103 includes at least one of the Multi-band element 507 and the Supported Operating element 508 as channel information. The STA 103 may use the Per Link Info 515 included in the ML element 506 as channel information, in addition to or in place of the Multi-band element 507 and the Supported Operating element 508. In a case where the Per Link Info 515 is used as channel information, the Per Link Info 515 may be configured to include one or both of the Band ID 521 and the Supported CH 523.

The STA 103 transmits the probe request frame including channel information to the AP 102, whereby the AP 102 is provided with a notification about the frequency band and/or the frequency channel via which the own apparatus can execute communication. Further, the STA 103 transmits the probe request frame including the ML element 506, whereby the STA 103 provides the AP 102 with a notification indicating that the own apparatus is compliant with multi-link communication.

The name of each of the fields illustrated in Fig. 5 and the order of the transmission and the generation of the fields are not limited to those in this example. Similar information in fields having different names may be included, and the transmission and the generation may be performed in different orders. Some of the fields or sub-fields illustrated in Fig. 5 may be omitted.

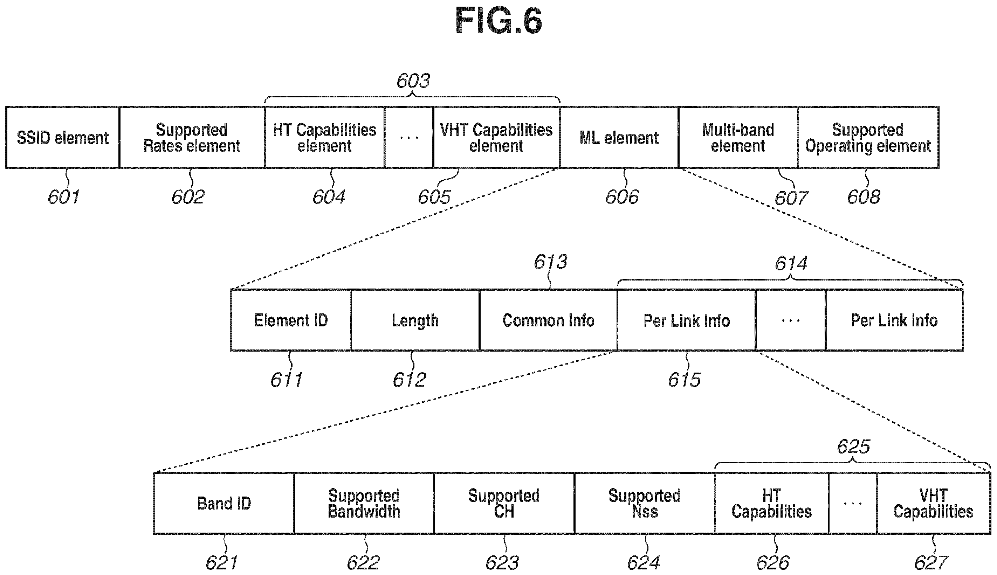

Fig. 6 illustrates a frame configuration example of the probe response frame. In the present exemplary embodiment, the probe response frame includes fields of an SSID element 601, a Supported Rates element 602, and an HT Capabilities element 604. Further, the probe response frame includes fields of a VHT Capabilities element 605 and an ML element 606. Further, the probe response frame includes fields of a Multi-band element 607 and a Supported Rates element 608.

The AP 102 sequentially transmits the fields illustrated in Fig. 6 from the SSID element 601 on the left side. The AP 102 may start to transmit the probe response frame after completion of generation of all the fields included in the probe response frame. Alternatively, the AP 102 may start the transmission after completion of generation of some fields and may perform generation of the other fields and transmission of the generated fields in parallel.

The fields 601 to 624 illustrated in Fig. 6 include information similar to that in the fields 501 to 524 illustrated in Fig. 5. While the fields 501 to 524 illustrated in Fig. 5 include information indicating the capability information about the STA 103, the fields 601 to 624 illustrated in Fig. 6 include information indicating the capability information about the AP 102.

In the probe response frame, Per Link Info 615 may include a field 625 indicating capability information in the frequency band indicated in a Band ID 621 of the AP 102. Alternatively, the field 625 may include information indicating the capability information about the AP 102 in the frequency channel indicated in Supported CH 623.

Specifically, the field 625 is configured to include an HT Capabilities element 626 and a VHT Capabilities element 627. Each of the fields includes information similar to that in the fields 504 and 505 illustrated in Fig. 5. An EHT Capabilities element field may be included in addition to or in place of these fields.

The AP 102 decides channel information to be included in the probe response frame, based on the channel information about the STA 103 included in the request frame received from the STA 103. The AP 102 decides to include, in the probe response frame, only the capability information about the frequency band and/or the frequency channel indicated by the channel information received from the STA 103. Specifically, the AP 102 includes, in the ML element 606, only the Per Link Info corresponding to the frequency band and/or the frequency channel indicated by the channel information included in the probe request frame received from the STA 103. The AP 102 does not include, in the probe response frame, capability information about the frequency band and frequency channel which are not supported by the STA 103, whereby the communication overhead can be reduced.

The name of each of the fields illustrated in Fig. 6 and the order of transmission and generation of the fields are not limited to those in this example. Similar information in fields having different names may be included, and the transmission and the generation may be performed in different orders. Some of the fields or sub-fields illustrated in Fig. 6 may be omitted.

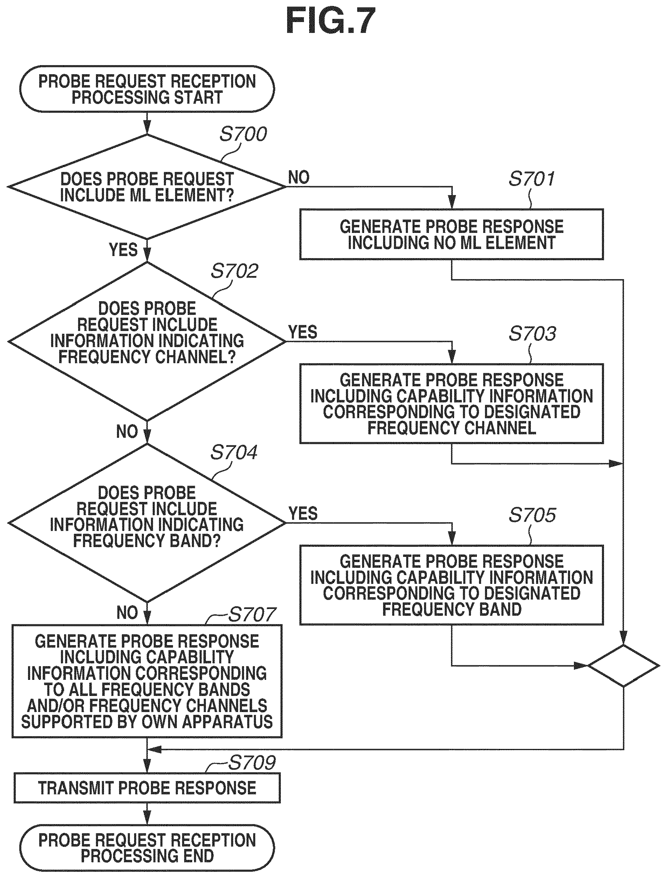

Fig. 7 is a flowchart illustrating processing that is executed by the control unit 202 reading out computer programs stored in the storage unit 201 and executing the computer programs when the AP 102 provides a notification about capability information. The processing in this flowchart is started when at least one of the connection processing units AP 1 to AP 3 in the AP 102 receives the probe request frame from the STA. The AP 1 to AP 3 may execute the processing in this flowchart independently or in parallel.

In step S700, the AP 102 determines whether the probe request frame received from the STA 103 includes the ML element. In a case where the received probe request frame includes the ML element, the AP 102 determines that a result in this step is "Yes" and performs processing of step S702. On the other hand, in a case where the probe request frame does not include the ML element, the AP 102 determines that a result in this step is "No" and performs processing of step S701.

In a case where the received probe request frame does not include the ML element, then in step S701, the AP 102 generates the probe response frame in which a ML element is not included. Specifically, the probe response frame that does not include the ML element 606 illustrated in Fig. 6 is generated. Since this probe response frame does not include a ML element, the probe response frame has backward compatibility with a system compliant with the IEEE 802.11 series standards prior to the IEEE 802.11 ax standard. Since the received probe request frame in which a ML element is not included, the AP 102 determines that the STA 103 does not support multi-link communication. After completion of processing of this step, the AP 102 performs processing of step S709.

In a case where the determination result in step S700 is "Yes", then in step S702, the AP 102 determines whether the received probe request frame includes information indicating a frequency channel. In this case, the received probe request frame includes the ML element. Accordingly, the AP 102 determines that the STA 103 supports multi-link communication. Specifically, the information indicating the frequency channel is information indicating the frequency channel included in the Supported CH 523 in the Per Link Info illustrated in Fig. 5. Alternatively, the information may be information indicating the frequency channel included in the operating classes in the Multi-band element 507. Yet alternatively, the information may be information indicating the frequency channel included in the Supported Operating element 508. In a case where the received probe request frame does not include the information indicating the frequency channel, the AP 102 determines that a result in this step is "No" and performs processing of step S704. On the other hand, in a case where the probe request frame includes the information indicating the frequency channel, the AP 102 determines that a result in this step is "Yes" and performs processing of step S703.

In step S703, the AP 102 generates the probe response frame including capability information corresponding to the frequency channel designated by the information indicating the frequency channel included in the received probe request frame. Specifically, the AP 102 generates the probe response frame including the ML element 606 including only the Per Link Info 615 including the Supported CH 523 corresponding to the designated frequency channel. After completion of processing of this step, the AP 102 performs processing of step S709.

In the present exemplary embodiment, the AP 102 generates the probe response frame including only the capability information corresponding to the designated frequency channel in step S703. However, the configuration of the probe response frame is not limited to this example. The AP 102 may generate the probe response frame including only the capability information corresponding to the frequency band to which the designated frequency channel belongs. Also, in this case, the probe response frame includes no capability information corresponding to the frequency bands to which the designated frequency channel does not belong, which leads to a reduction in communication overhead.

In a case where the determination result in step S702 is "No", then in step S704, the AP 102 determines whether the received probe request frame includes the information indicating the frequency band. Specifically, the information indicating the frequency band is information that is included in the Band ID 521 in the Per Link Info 515 illustrated in Fig. 5 and indicates the frequency band. Alternatively, the information may be information that is included in the band ID in the Multi-band element 507 and indicates the frequency band. Yet alternatively, the information may be information that is included in the Supported Operating element 508 and indicates the frequency band. In a case where the received probe request frame does not include the information indicating the frequency band, the AP 102 determines that a result in this step is "No" and performs processing of step S707. On the other hand, in a case where the probe request frame includes the information indicating the frequency band, the AP 102 determines that a result in this step is "Yes" and performs processing of step S705.

In step S705, the AP 102 generates the probe response frame including capability information corresponding to the frequency band designated by the information indicating the frequency band included in the received probe request frame. Specifically, the AP 102 generates the probe response frame including the ML element 606 including only the Per Link Info 615 including the Band ID 521 corresponding to the designated frequency band. After completion of processing of this step, the AP 102 performs processing of step S709.

In a case where the determination result in step S704 is "No", then in step S707, the AP 102 generates the probe response frame including capability information corresponding to all frequency bands and/or frequency channels supported by the own apparatus. Specifically, the AP 102 generates the probe response frame including the ML element 606 including the Per Link Info 615 corresponding to all frequency bands and/or frequency channels via which the own apparatus can execute multi-link communication. After completion of processing of this step, the AP 102 performs processing of step S709.

In step S709, the AP 102 transmits the generated probe response frame to the STA 103 that has transmitted the received probe request frame.

As described above with reference to Fig. 7, the AP 102 decides the capability information to be included in the probe response frame, based on the information included in the received probe request frame, whereby the communication overhead can be reduced. In a case where the STA 103 does not support multi-link communication, the STA 103 does not include the ML element in the probe response frame, whereby the communication overhead can be further reduced.

In a case where, among links already established by the AP 102, there is a link of which communication load status is high and which is desired not to be used for communication with the STA 103, the probe response frame excluding the capability information corresponding to the link may be generated. The high communication load status indicates, for example, a case where the amount of data to be communicated within a predetermined period in the link exceeds a predetermined threshold, a case where the amount of data that cannot be successfully communicated within the predetermined period in the link exceeds the predetermined threshold, or a case where the reception strength of a signal received from another communication apparatus via the link is less than the predetermined threshold. Thus, the capability information about the link to be excluded from the communication with the STA 103 is not included in the probe response frame. This configuration enables the AP 102 to further reduce the communication overhead.

### <Second Exemplary Embodiment>

The first exemplary embodiment described above illustrates processing that is executed by the AP 102 when the AP 102 receives the probe request frame from the STA 103 via one frequency channel. A second exemplary embodiment illustrates processing that is executed by the AP 102 when the AP 102 receives the probe request frame from the STA 103 via two or more frequency channels.

The network configuration of the network in which the AP 102 participates is similar to that illustrated in Fig. 1 according to the first exemplary embodiment. The hardware configuration of the AP 102 is similar to that illustrated in Fig. 2 according to the first exemplary embodiment. The functional configuration of the AP 102 is similar to that illustrated in Fig. 3 according to the first exemplary embodiment. The frame configuration of the probe request frame is similar to that illustrated in Fig. 5. The frame configuration of the probe response frame is similar to that illustrated in Fig. 6. Only differences from the first exemplary embodiment will now be described.

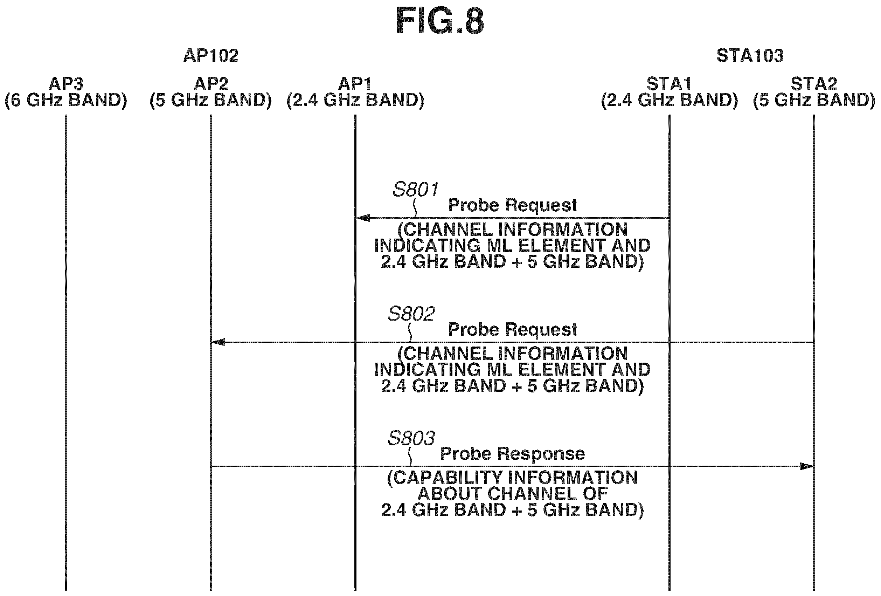

Fig. 8 is a sequence diagram illustrating another example of processing that is executed when the AP 102 provides the STA 103 with a notification about capability information. The processing in this sequence is started in response to power-on of the AP 102 and the STA 103. Alternatively, the processing may be started in response to issuance of a multi-link communication start instruction from the user or application in at least one of the AP 102 and the STA 103. Yet alternatively, the processing may be started when the amount of data to be communicated with the partner device is more than or equal to a predetermined threshold in at least one of the AP 102 and the STA 103.

The AP 102 and the STA 103 support multi-link communication, like in Fig. 4 according to the first exemplary embodiment, and include connection processing units each corresponding to a different link of the plurality of links. The AP 1 to AP 3 may be configured as independent pieces of hardware or may be configured as software. The same can be applied to the STA 1 and STA 2.

In step S801, the STA 1 that is included in the STA 103 and operates in the 2.4 GHz band transmits the probe request frame to request capability information about multi-link communication for the AP 102. In this processing, the STA 103 may transmit the probe request frame in this step as a response to a beacon frame (not illustrated) received from the AP 102 prior to step S801.

In this processing, the probe request frame transmitted from the STA 103 includes an ML element and channel information indicating at least one of the frequency channels and the frequency band supported by the STA 103. In the present exemplary embodiment, the STA 103 supports wireless communication in the 2.4 GHz band and the 5 GHz band, and thus the probe request frame includes information indicating that the 2.4 GHz band and the 5 GHz band are supported as channel information.

In the present exemplary embodiment, the probe request frame includes channel information separately from the ML element. However, the configuration of the probe request frame is not limited to this example, and channel information may be included in the ML element.

Next, in step S802, the STA 2 that is included in the STA 103 and operates in the 5 GHz band transmits the probe request frame to request capability information about multi-link communication for the AP 102. This step may occur, for example, when communication in the frequency channel currently used by the STA 1 is temporarily congested and the AP 102 cannot transmit the probe response frame for a certain period. In a case where the STA 103 fails to receive a response after the lapse of a certain period of time from the transmission of the probe request frame via the STA 1, the STA 103 can transmit the probe request frame again via the STA 2 that uses a different frequency band. The probe request frame transmitted in this step includes information indicating that the 2.4 GHz band and the 5 GHz band are supported as channel information, like the probe request frame transmitted in step S801.

In a case where the AP 102 receives the probe request frame from the STA 103 via a plurality of frequency channels, the AP 102 may transmit the probe response frame to the STA 103 via any one of the frequency channels. In this sequence, in step S803, the AP 2 that is included in the AP 102 and operates in the 5 GHz band transmits the probe response frame to the STA 103. The probe response frame transmitted in this step includes the capability information decided based on the channel information about the STA 103 included in the probe request frame received by the AP 102, like in step S402 illustrated in Fig. 4. Instead of the AP 2 that has subsequently received the probe request frame and operates in the 5 GHz band, the AP 1 that has received the probe request frame first and operates in the 2.4 GHz band may transmit the probe response frame. The AP 102 may receive three or more probe request frames from the STA 103.

As described above with reference to Fig. 8, even when the AP 102 receives the probe request frame from the same STA via two or more frequency channels, the AP 102 transmits the probe response frame via only one frequency channel. This configuration prevents repeating transmission of the probe response frame of the same content from the AP 102, which can prevent an increase in communication overhead.

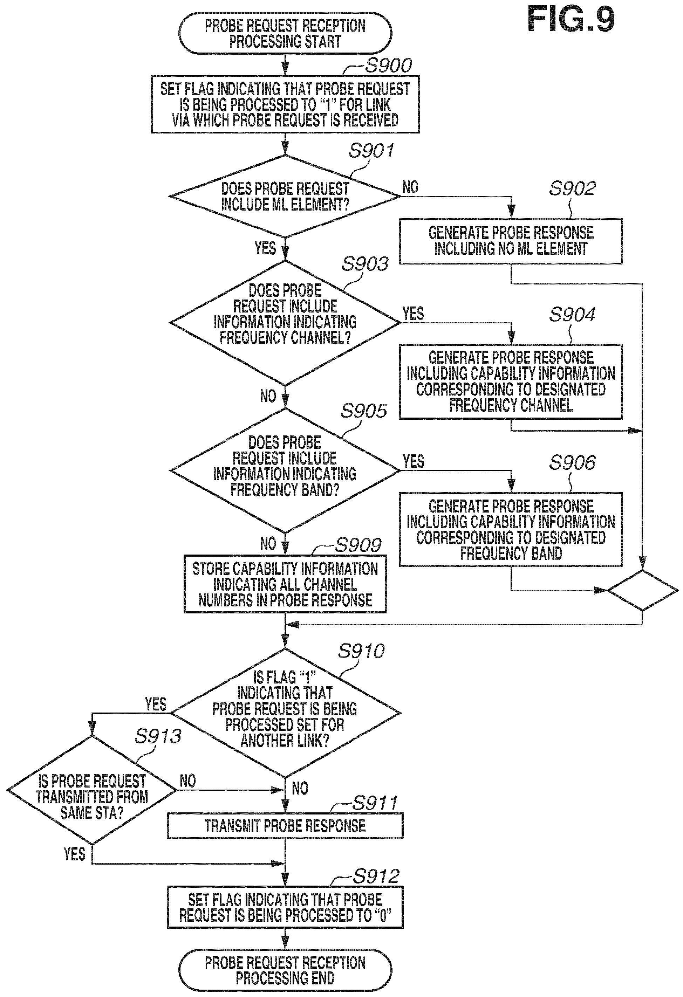

Fig. 9 is a flowchart illustrating another processing that is executed by the control unit 202 reading out computer programs stored in the storage unit 201 and executing the programs when the AP 102 provides a notification about capability information. The processing in this flowchart is started when at least one of the connection units AP 1 to AP 3 in the AP 102 receives the probe request frame from the STA. The AP 1 to AP 3 may independently execute the processing in this flowchart in parallel.

In step S900, in response to receipt of the probe request frame from the STA 103, the AP 102 sets a flag indicating that the probe request frame for the received link is being processed to "1".

Steps S901 to S909 are processing similar to steps S700 to S707, respectively, in Fig. 7 according to the first exemplary embodiment.

After generating the probe response frame to be transmitted, in step S910, the AP 102 determines whether the flag indicating that the probe request frame for another link is being processed is set to "1". Specifically, determination of whether the flag is set for another link different from the link for which the flag is set in step S900 is performed. In a case where the flag is not set for another link, the AP 102 determines that a result in this step is "No" and performs processing of step S911. On the other hand, in a case where the flag is set for another link, the AP 102 determines that a result in this step is "Yes" and performs processing of step S913.

In step S913, The AP 102 determines whether the transmission source of the probe request frame received via the link for which the flag is set in step S900 matches the transmission source of the probe request frame received via another link for which the flag is set in step S910. Specifically, the AP 102 compares pieces of identification information each indicating the transmission source included in the respective received probe request frames. In a case where the pieces of identification information match each other, the AP 102 determines that a result in this step is "Yes" and performs processing of step S912. On the other hand, in a case where the pieces of identification information each indicating the transmission source do not match each other, the AP 102 determines that a result in this step is "No" and performs processing of step S911.

In step S911, the AP 102 transmits the generated probe response frame to the STA that has transmitted the probe request frame received in step S900. After completion of processing of step S911, the AP 102 performs processing of step S912.

In step S912, the AP 102 sets the flag indicating that the probe request frame for the received link is being processed to "0". After completion of processing of step S912, the AP 102 terminates this processing flow.

As described above with reference to Fig. 9, the AP 102 transmits the probe response frame via only one frequency channel even when the AP 102 receives the probe request frames from the same STA via a plurality of frequency channels. This configuration prevents repeating transmission of the probe response frame including the same capability information from the AP 102, which can prevent an increase in communication overhead.

The processing according to the first exemplary embodiment and the processing according to the second exemplary embodiment are executed by different APs, but instead may be executed by one AP. In this case, the AP includes a mode for the processing according to the first exemplary embodiment and a mode for the processing according to the second exemplary embodiment. This AP may select which of the modes to be used for operation to execute the processing according to the exemplary embodiments, based on a user instruction or based on an instruction from an application.

At least a part or all of the flowcharts for the AP 102 illustrated in Figs. 7 and 9 may be implemented using hardware. In a case where the flowcharts are implemented using hardware, for example, a predetermined compiler may be used to generate a dedicated circuit on an FPGA based on computer programs for implementing each step, and the generated circuit may be used. FPGA stands for Field Programmable Gate Array. A gate array circuit may be formed like the FPGA, and may be implemented as hardware, or may be implemented as an application specific integrated circuit (ASIC).

The present invention can also be implemented by processing in which a program for implementing one or more functions according to the above-described exemplary embodiments is supplied to a system or an apparatus via a network or a storage medium, and one or more processors in a computer in the system or the apparatus read out and executes the program. The present invention can also be implemented by a circuit (e.g., an ASIC) for implementing one or more functions.

The present invention is not limited to the above-described exemplary embodiments, and various modifications and changes can be made without departing from the scope of the present invention. Accordingly, the following claims are appended to disclose the scope of the present invention.

## Claims

1. A communication apparatus comprising:
reception means for receiving a probe request frame including a multi-link element from another communication apparatus;
decision means for deciding, based on predetermined identification information which is included in a field, which corresponds to a link (515), in the multi-link element included in the probe request frame received by the reception means from the another communication apparatus, to include, in a probe response frame corresponding to the link (515), capability information indicating a capability related to multi-link communication that is performed via a plurality of links to be established with a partner apparatus, and the capability information being about a link corresponding to the predetermined identification information, as capability information about each link; and
transmission means for transmitting the probe response frame including the capability information decided by the decision means as a response to the probe request frame,
wherein in a case where the predetermined identification information corresponding to the link is not included in the multi-link element included in the probe request frame received by the reception means, the transmission means transmits the probe response frame including information for each link corresponding to all links supported by the communication apparatus as the capability information.

2. The communication apparatus according to Claim 1, further comprising:
determination means for determining, in a case where the probe request frame is received by the reception means, whether the another communication apparatus is configured to execute the multi-link communication that is performed via the plurality of links established with the partner apparatus,
wherein, in a case where the determination means determines that the another communication apparatus is configured to execute the multi-link communication, the decision means decides to include the capability information in the probe response frame, and in a case where the determination means determines that the another communication apparatus is not configured to execute the multi-link communication, the decision means decides not to include the capability information in the probe response frame.

3. The communication apparatus according to Claim 1 or 2,wherein the capability information about each link of the multi-link element included in the probe response frame transmitted by the transmission means as a response to the probe request frame, includes the capability information about the link corresponding to the information identifying the link but does not include capability information about a link different from the link corresponding to the information identifying the link.

4. The communication apparatus according to Claim 1 or 2, wherein, in a case where the received probe request frame includes information indicating a frequency channel, the capability information which the decision means decides to include in the probe response frame is only capability information corresponding to a frequency band including a frequency channel which corresponds to the predetermined identification information included in the received probe request frame.

5. The communication apparatus according to Claim 1 or 2, wherein, in a case where the received probe request frame includes information indicating a frequency band, the capability information which the decision means decides to include in the probe response frame is only capability information corresponding to a frequency band which corresponds to the predetermined identification information included in the received probe request frame.

6. The communication apparatus according to any one of Claims 1 to 5, wherein the multi-link element included in the probe response frame transmitted by the transmission means is a multi-link element compliant with Institute of Electrical and Electronics Engineers IEEE 802.11 series standards.

7. The communication apparatus according to Claim 6, wherein the element indicating the capability related to the multi-link communication is the multi-link element compliant with Institute of Electrical and Electronics Engineers IEEE 802.11 series standards, and the decision means decides, based on the predetermined identification information which is included in the field, which corresponds to the link, in the multi-link element included in the received probe request frame, to include, in the probe response frame, a field which corresponds to the link corresponding to the predetermined identification information.

8. The communication apparatus according to Claim 6 or 7, wherein the transmission means transmits the probe response frame including, as the capability information, a high throughput HT capabilities element indicating capability information for communication compliant with the IEEE 802.11 n standard.

9. The communication apparatus according to any one of Claims 6 to 8, wherein the transmission means transmits the probe response frame including, as the capability information, a Very High Throughput VHT capabilities element indicating capability information for communication compliant with the IEEE 802.11 ac standard.

10. The communication apparatus according to any one of Claims 1 to 9, wherein a multi-band element compliant with the IEEE 802.11 series standards is included in the received probe request frame.

11. The communication apparatus according to any one of Claims 1 to 10, wherein a Supported Operating element compliant with the IEEE 802.11 series standards is included in the received probe request frame.

12. The communication apparatus according to any one of Claims 1 to 11, wherein, in a case where the reception means receives the probe request frame from the another communication apparatus via a plurality of frequency channels, the transmission means transmits the probe response frame via a first frequency channel among the plurality of frequency channels and does not transmit the probe response frame via a frequency channel(s) different from the first frequency channel among the plurality of frequency channels.

13. A control method performed by a communication apparatus, comprising:
receiving a probe request frame including a multi-link element from another communication apparatus;
deciding, based on predetermined identification information which is included in a field, which corresponds to a link (515), in the multi-link element included in the probe request frame received from the another communication apparatus, to include, in a probe response frame corresponding to the link (515), capability information indicating a capability related to multi-link communication that is performed via a plurality of links to be established with a partner apparatus, and the capability information being about a link corresponding to the predetermined identification information, as capability information about each link; and
transmitting the probe response frame including the decided capability information as a response to the probe request frame,
wherein in a case where the predetermined identification information corresponding to the link is not included in the multi-link element included in the probe request frame received by the reception means, the transmission means transmits the probe response frame including information for each link corresponding to all links supported by the communication apparatus as the capability information.

14. A computer program comprising instructions which, when the program is executed a communication apparatus causes the communication apparatus to carry out the method according to Claim 13.

## Patentansprüche

1. Kommunikationsvorrichtung, umfassend:
eine Empfangseinrichtung zum Empfangen eines Probenanfrage-Frames, der ein Multi Link Element enthält, von einer anderen Kommunikationsvorrichtung;
eine Festlegungseinrichtung zum Festlegen, basierend auf einer vorbestimmten Identifikationsinformation, die in einem einem Link (515) entsprechenden Feld im Multi Link Element enthalten ist, welches im Probenanfrage-Frame enthalten ist, welcher durch die Empfangseinrichtung von der anderen Kommunikationsvorrichtung empfangen wird, dass in einem Probenantwort-Frame, welcher dem Link (515) entspricht, eine Fähigkeitsinformation aufzunehmen ist, die eine Fähigkeit in Bezug auf eine Multi-Link-Kommunikation angibt, die über mehrere mit einer Partnervorrichtung herzustellende Links durchgeführt wird, und wobei die Fähigkeitsinformation über einen Link ist, welcher der vorbestimmten Identifikationsinformation entspricht, als eine Fähigkeitsinformation über einen jeweiligen Link; und
eine Übertragungseinrichtung zum Übertragen des Probenantwort-Frames, welcher die durch die Festlegungseinrichtung festgelegte Fähigkeitsinformation enthält, als eine Antwort auf den Probenanfrage-Frame,
wobei in einem Fall, in welchem die vorbestimmte Identifikationsinformation, welche dem Link entspricht, nicht im Multi Link Element enthalten ist, welches im durch die Empfangseinrichtung empfangenen Probenanfrage-Frame enthalten ist, die Übertragungseinrichtung den Probenantwort-Frame, der eine Information für einen jeweiligen Link enthält, entsprechend allen Links, welche durch die Kommunikationsvorrichtung unterstützt werden, als die Fähigkeitsinformation überträgt.

2. Kommunikationsvorrichtung nach Anspruch 1, ferner umfassend:
eine Bestimmungseinrichtung zum Bestimmen, in einem Fall, in welchem der Probenanfrage-Frame durch die Empfangseinrichtung empfangen wird, ob die andere Kommunikationsvorrichtung konfiguriert ist, die Multi-Link-Kommunikation auszuführen, welche über die mehreren mit der Partnervorrichtung herzustellenden Links durchgeführt wird,
wobei in einem Fall, in welchem die Bestimmungseinrichtung bestimmt, dass die andere Kommunikationsvorrichtung konfiguriert ist, die Multi-Link-Kommunikation auszuführen, die Festlegungseinrichtung festlegt, die Fähigkeitsinformation in den Probenantwort-Frame aufzunehmen, und in einem Fall, in welchem die Bestimmungseinrichtung bestimmt, dass die andere Kommunikationsvorrichtung nicht konfiguriert ist, die Multi-Link-Kommunikation auszuführen, die Festlegungseinrichtung festlegt, die Fähigkeitsinformation nicht in den Probenantwort-Frame aufzunehmen.

3. Kommunikationsvorrichtung nach Anspruch 1 oder 2, wobei die Fähigkeitsinformation über einen jeweiligen Link des Multi Link Elements, welches im durch die Übertragungseinrichtung als eine Antwort auf den Probenanfrage-Frame übertragenen Probenantwort-Frame enthalten ist, die Fähigkeitsinformation über den Link enthält, welcher der den Link identifizierenden Information entspricht, aber keine Fähigkeitsinformation über einen Link enthält, welcher sich vom Link unterscheidet, welcher der den Link identifizierenden Information entspricht.

4. Kommunikationsvorrichtung nach Anspruch 1 oder 2, wobei in einem Fall, in welchem der empfangene Probenanfrage-Frame Information enthält, die einen Frequenzkanal angibt, die Fähigkeitsinformation, für welche die Festlegungseinrichtung festlegt, dass sie in den Probenantwort-Frame aufgenommen wird, nur eine Fähigkeitsinformation ist, die einem Frequenzband entspricht, welches einen Frequenzkanal enthält, welcher der vorbestimmten Identifikationsinformation entspricht, welche im empfangenen Probenanfrage-Frame enthalten ist.

5. Kommunikationsvorrichtung nach Anspruch 1 oder 2, wobei in einem Fall, in welchem der empfangene Probenanfrage-Frame eine Information enthält, die ein Frequenzband angibt, die Fähigkeitsinformation, für welche die Festlegungseinrichtung festlegt, dass sie in den Probenantwort-Frame aufgenommen wird, nur eine Fähigkeitsinformation ist, die einem Frequenzband entspricht, welches der vorbestimmten Identifikationsinformation entspricht, welche im empfangenen Probenanfrage-Frame enthalten ist.

6. Kommunikationsvorrichtung nach einem der Ansprüche 1 bis 5, wobei das Multi Link Element, welches im durch die Übertragungseinrichtung übertragenen Probenantwort-Frame enthalten ist, ein Multi Link Element ist, welches mit den Standards der IEEE 802.11-Reihe des Institute of Electrical and Electronics Engineers konform ist.

7. Kommunikationsvorrichtung nach Anspruch 6, wobei das Element, welches die Fähigkeit in Bezug auf die Multi-Link-Kommunikation angibt, das Multi Link Element ist, welches mit den Standards der IEEE 802.11-Reihe des Institute of Electrical and Electronics Engineers konform ist, und die Festlegungseinrichtung festlegt, basierend auf der vorbestimmten Identifikationsinformation, welche im dem Link entsprechenden Feld im Multi Link Element enthalten ist, welches im empfangenen Probenanfrage-Frame enthalten ist, dass im Probenantwort-Frame ein Feld aufzunehmen ist, welches dem Link entspricht, welcher der vorbestimmten Identifikationsinformation entspricht.

8. Kommunikationsvorrichtung nach Anspruch 6 oder 7, wobei die Übertragungseinrichtung den Probenantwort-Frame überträgt, welcher als die Fähigkeitsinformation ein High-Throughput-Fähigkeitenelement, HT-Fähigkeitenelement, enthält, welches eine Fähigkeitsinformation für eine mit dem IEEE 802.11n-Standard konforme Kommunikation angibt.

9. Kommunikationsvorrichtung nach einem der Ansprüche 6 bis 8, wobei die Übertragungseinrichtung den Probenantwort-Frame überträgt, welcher als die Fähigkeitsinformation ein Very-High-Throughput-Fähigkeitenelement, VHT-Fähigkeitenelement, enthält, welches eine Fähigkeitsinformation für eine mit dem IEEE 802.11ac-Standard konforme Kommunikation angibt.

10. Kommunikationsvorrichtung nach einem der Ansprüche 1 bis 9, wobei ein Multi Band Element, welches mit den Standards der IEEE 802.11-Reihe konform ist, im empfangenen Probenanfrage-Frame enthalten ist.

11. Kommunikationsvorrichtung nach einem der Ansprüche 1 bis 10, wobei ein Supported Operating Element, welches mit den Standards der IEEE 802.11-Reihe konform ist, im empfangenen Probenanfrage-Frame enthalten ist.

12. Kommunikationsvorrichtung nach einem der Ansprüche 1 bis 11, wobei in einem Fall, in welchem die Empfangseinrichtung den Probenanfrage-Frame von der anderen Kommunikationsvorrichtung über mehrere Frequenzkanäle empfängt, die Übertragungseinrichtung den Probenantwort-Frame über einen ersten Frequenzkanal unter den mehreren Frequenzkanälen überträgt und den Probenantwort-Frame nicht über einen Frequenzkanal/Frequenzkanäle überträgt, der/die sich vom ersten Frequenzkanal unter den mehreren Frequenzkanälen unterscheidet/unterscheiden.

13. Steuerverfahren, welches von einer Kommunikationsvorrichtung durchgeführt wird, umfassend:
Empfangen eines Probenanfrage-Frames, der ein Multi Link Element enthält, von einer anderen Kommunikationsvorrichtung;
Festlegen, basierend auf einer vorbestimmten Identifikationsinformation, die in einem einem Link (515) entsprechenden Feld im Multi Link Element enthalten ist, welches im von der anderen Kommunikationsvorrichtung empfangenen Probenanfrage-Frame enthalten ist, dass in einem Probenantwort-Frame, welcher dem Link (515) entspricht, eine Fähigkeitsinformation aufzunehmen ist, die eine Fähigkeit in Bezug auf eine Multi-Link-Kommunikation angibt, die über mehrere mit einer Partnervorrichtung herzustellende Links durchgeführt wird, und wobei die Fähigkeitsinformation über einen Link ist, welcher der vorbestimmten Identifikationsinformation entspricht, als eine Fähigkeitsinformation über einen jeweiligen Link; und
Übertragen des Probenantwort-Frames, welcher die festgelegte Fähigkeitsinformation enthält, als eine Antwort auf den Probenanfrage-Frame,
wobei in einem Fall, in welchem die vorbestimmte Identifikationsinformation, welche dem Link entspricht, nicht im Multi Link Element enthalten ist, welches im durch die Empfangseinrichtung empfangenen Probenanfrage-Frame enthalten ist, die Übertragungseinrichtung den Probenantwort-Frame, der eine Information für einen jeweiligen Link enthält, entsprechend allen Links, welche durch die Kommunikationsvorrichtung unterstützt werden, als die Fähigkeitsinformation überträgt.

14. Computerprogramm, welches Anweisungen umfasst, welche bei Ausführung des Programms durch eine Kommunikationsvorrichtung veranlassen, dass die Kommunikationsvorrichtung das Verfahren nach Anspruch 13 ausführt.

## Revendications

1. Appareil de communication comprenant :
des moyens de réception pour recevoir une trame de demande de sonde incluant un élément à liaisons multiples à partir d'un autre appareil de communication ;
un moyen de décision pour décider, sur la base d'informations d'identification prédéterminées qui sont incluses dans un champ, qui correspond à une liaison (515), dans l'élément à liaisons multiples inclus dans la trame de demande de sonde reçue par les moyens de réception à partir de l'autre appareil de communication, d'inclure, dans une trame de réponse de sonde correspondant à la liaison (515), des informations de capacité indiquant une capacité liée à une communication à liaisons multiples qui est réalisée via une pluralité de liaisons à établir avec un appareil partenaire, et les informations de capacité concernant une liaison correspondant aux informations d'identification prédéterminées, en tant qu'informations de capacité concernant chaque liaison ; et
des moyens de transmission pour transmettre la trame de réponse de sonde incluant les informations de capacité décidées par les moyens de décision en tant que réponse à la trame de demande de sonde,
dans lequel dans un cas où les informations d'identification prédéterminées correspondant à la liaison ne sont pas incluses dans l'élément à liaisons multiples inclus dans la trame de demande de sonde reçue par les moyens de réception, les moyens de transmission transmettent la trame de réponse de sonde incluant des informations pour chaque liaison correspondant à toutes les liaisons prises en charge par l'appareil de communication en tant qu'informations de capacité.

2. Appareil de communication selon la revendication 1, comprenant en outre :
des moyens de détermination pour déterminer, dans un cas où la trame de demande de sonde est reçue par les moyens de réception, si l'autre appareil de communication est configuré pour exécuter la communication à liaisons multiples qui est réalisée via la pluralité de liaisons établies avec l'appareil partenaire,
dans lequel, dans un cas où le moyen de détermination détermine que l'autre appareil de communication est configuré pour exécuter la communication à liaisons multiples, le moyen de décision décide d'inclure les informations de capacité dans la trame de réponse de sonde, et dans un cas où le moyen de détermination détermine que l'autre appareil de communication n'est pas configuré pour exécuter la communication à liaisons multiples, le moyen de décision décide de ne pas inclure les informations de capacité dans la trame de réponse de sonde.

3. Appareil de communication selon la revendication 1 ou 2, dans lequel les informations de capacité concernant chaque liaison de l'élément à liaisons multiples inclus dans la trame de réponse de sonde transmise par les moyens de transmission en tant que réponse à la trame de demande de sonde, incluent les informations de capacité concernant la liaison correspondant aux informations identifiant la liaison mais n'incluent pas les informations de capacité concernant une liaison différente de la liaison correspondant aux informations identifiant la liaison.

4. Appareil de communication selon la revendication 1 ou 2, dans lequel, dans un cas où la trame de demande de sonde reçue inclut des informations indiquant un canal de fréquence, les informations de capacité que le moyen de décision décide d'inclure dans la trame de réponse de sonde ne sont que des informations de capacité correspondant à une bande de fréquence incluant un canal de fréquence qui correspond aux informations d'identification prédéterminées incluses dans la trame de demande de sonde reçue.

5. Appareil de communication selon la revendication 1 ou 2, dans lequel, dans un cas où la trame de demande de sonde reçue comporte des informations indiquant une bande de fréquences, les informations de capacité que le moyen de décision décide d'inclure dans la trame de réponse de sonde ne sont que des informations de capacité correspondant à une bande de fréquences qui correspond aux informations d'identification prédéterminées incluses dans la trame de demande de sonde reçue.

6. Appareil de communication selon l'une quelconque des revendications 1 à 5, dans lequel l'élément à liaisons multiples inclus dans la trame de réponse de sonde transmise par les moyens de transmission est un élément à liaisons multiples conforme aux normes de la série IEEE 802.11 de l'Institute of Electrical and Electronics Engineers.

7. Appareil de communication selon la revendication 6, dans lequel l'élément indiquant la capacité liée à la communication à liaisons multiples est l'élément à liaisons multiples conforme aux normes de la série IEEE 802.11 de l'Institute of Electrical and Electronics Engineers, et le moyen de décision décide, sur la base des informations d'identification prédéterminées qui sont incluses dans le champ, qui correspond à la liaison, dans l'élément à liaisons multiples inclus dans la trame de demande de sonde reçue, d'inclure, dans la trame de réponse de la sonde, un champ qui correspond à la liaison correspondant aux informations d'identification prédéterminées.

8. Appareil de communication selon la revendication 6 ou 7, dans lequel les moyens de transmission transmettent la trame de réponse de sonde incluant, en tant qu'informations de capacité, un élément de capacités à haut débit HT indiquant des informations de capacité pour une communication conforme à la norme IEEE 802.11 n.

9. Appareil de communication selon l'une quelconque des revendications 6 à 8, dans lequel les moyens de transmission transmettent la trame de réponse de sonde incluant, en tant qu'information de capacité, un élément de capacités de très haut débit VHT indiquant des informations de capacité pour une communication conforme à la norme IEEE 802.11 ac.

10. Appareil de communication selon l'une quelconque des revendications 1 à 9, dans lequel un élément à bandes multiples conforme aux normes de série IEEE 802.11 est inclus dans la trame de demande de sonde reçue.

11. Appareil de communication selon l'une quelconque des revendications 1 à 10, dans lequel un élément de fonctionnement pris en charge conforme aux normes de la série IEEE 802.11 est inclus dans la trame de demande de sonde reçue.

12. Appareil de communication selon l'une quelconque des revendications 1 à 11, dans lequel, dans un cas où le moyen de réception reçoit la trame de demande de sonde à partir de l'autre appareil de communication via une pluralité de canaux de fréquence, le moyen de transmission transmet la trame de réponse de sonde via un premier canal de fréquence parmi la pluralité de canaux de fréquence et ne transmet pas la trame de réponse de sonde via un ou plusieurs canaux de fréquence différents du premier canal de fréquence parmi la pluralité de canaux de fréquence.

13. Procédé de commande réalisé par un appareil de communication, comprenant :
la réception d'une trame de demande de sonde incluant un élément à liaisons multiples à partir d'un autre appareil de communication ;
la décision, sur la base d'informations d'identification prédéterminées qui sont incluses dans un champ, qui correspond à une liaison (515), dans l'élément à liaisons multiples inclus dans la trame de demande de sonde reçue à partir de l'autre appareil de communication, d'inclure,
dans une trame de réponse de sonde correspondant à la liaison (515), des informations de capacité indiquant une capacité liée à une communication à liaisons multiples qui est réalisée via une pluralité de liaisons à établir avec un appareil partenaire, et les informations de capacité concernant une liaison correspondant aux informations d'identification prédéterminées, en tant qu'informations de capacité concernant chaque liaison ; et
la transmission de la trame de réponse de sonde incluant les informations de capacité décidées en tant que réponse à la trame de demande de sonde,
dans lequel dans un cas où les informations d'identification prédéterminées correspondant à la liaison ne sont pas incluses dans l'élément à liaisons multiples inclus dans la trame de demande de sonde reçue par les moyens de réception, les moyens de transmission transmettent la trame de réponse de sonde incluant des informations pour chaque liaison correspondant à toutes les liaisons prises en charge par l'appareil de communication en tant qu'informations de capacité.

14. Programme d'ordinateur comprenant des instructions qui, lorsque le programme est exécuté par un appareil de communication, amènent l'appareil de communication à réaliser le procédé selon la revendication 13.
